# EUROPEAN PATENT SPECIFICATION

(11) **EP 2 903 219 B1**
(45) Date of publication and mention of the grant of the patent: **26.04.2017**
(21) Application number: 13871204.7
(22) Date of filing: 23.07.2013
(51) Int. Cl.: H04L 29/06

(54) **METHOD, PLAYER AND TERMINAL FOR SELECTING CODE STREAM SEGMENTATIONS BASED ON STREAM MEDIA**
VERFAHREN, ABSPIELVORRICHTUNG UND ENDGERÄT ZUR AUSWAHL VON CODESTREAMSEGMENTATIONEN AUF DER BASIS VON STREAMMEDIEN
PROCÉDÉ, LECTEUR ET TERMINAL PERMETTANT DE SÉLECTIONNER DES SEGMENTATIONS DE FLUX DE CODE SUR LA BASE D'UN FLUX MULTIMÉDIA

(30) Priority: 14.01.2013 CN 201310012242
(43) Date of publication of application: 05.08.2015
(60) Divisional application: 17150018.4
(73) Proprietor: Huawei Technologies Co., Ltd., Longgang District Shenzhen, Guangdong 518129 (CN)
(72) Inventor: DI, Peiyun, Shenzhen Guangdong 518129 (CN); LIU, Xin, Shenzhen Guangdong 518129 (CN); XU, Yangpo, Shenzhen Guangdong 518129 (CN)
(74) Representative: Goddar, Heinz J.
(86) International application number: PCT/CN2013/079881
(87) International publication number: WO 2014/107951

(56) References cited:
- EP-A1- 2 410 744
- WO-A1-2007/142694
- WO-A1-2011/047335
- WO-A1-2012/001339
- CN-A- 1 747 448
- CN-A- 102 710 586
- US-A1- 2007 133 405
- US-A1- 2013 007 223
- JARNIKOV D ET AL: "Client intelligence for adaptive streaming solutions", MULTIMEDIA AND EXPO (ICME), 2010 IEEE INTERNATIONAL CONFERENCE ON, IEEE, PISCATAWAY, NJ, USA, 19 July 2010 (2010-07-19), pages 1499-1504, XP031761591, ISBN: 978-1-4244-7491-2

## Description

### TECHNICAL FIELD

The present invention relates to video communications technologies in a communications system, and in particular, to a method, a player, and a terminal for selecting a bitstream segment based on streaming media.

### BACKGROUND

A streaming media technology is a technology that implements media data transmission by using HTTP (Hypertext transfer protocol, Hypertext Transfer Protocol) at an application layer, and this technology can implement that a media program can be watched when the media program is downloaded. To adapt to diversity of terminals and fluctuation of bandwidth of a network accessed by a user, multiple bitstreams are simultaneously stored for a same piece of media content on a server that provides media content. Audio and video coding parameters, bit rates, or video resolutions of bitstreams are different, and each bitstream is divided into multiple segments, and each segment can be independently played. A terminal may request segments with different bit rates according to network bandwidth information, and the segments with different bit rates can be continuously played on the terminal.

In the prior art, a server provides an MPD (media presentation description, media presentation description) of media content for a terminal; and in the MPD, information about each bitstream, such as a bit rate and time, is described, and information about each segment, such as a bit rate, time, a URL (Uniform/Universal Resource Locator, uniform/universal resource locator), is also described. After obtaining the MPD, the terminal parses the MPD to obtain information, such as a bit rate, about a bitstream provided by the corresponding media content in the server, and the terminal requests, according to network bandwidth of the terminal, a media program segment with a maximum bit rate that is less than current bandwidth. Implementation of the method is simple, but only a situation that a segment bit rate does not exceed bandwidth is considered during the implementation of the method. Using the method can neither fully use bandwidth resources, nor bring good video experience to a user.

US 20130007223 A1 discloses a block-request streaming system that provides low-latency streaming of a media presentation. A plurality of media segments are generated according to an encoding protocol. Each media segment includes a random access point. A plurality of media fragments are encoded according to the same protocol. The media segments are aggregated from a plurality of media fragments.

WO 2012/01339 A1 discloses a network that contains one or more network based video servers connected to one or more video receivers over a shared network. Multiple pieces of video content are each encoded at a number of constant quality levels and stored on one or more of the network based servers.

US 2007/133405 A1 discloses a congestion controller for a media server that monitors both the buffer status of the client device as well as the network performance. The congestion controller may increase or decrease the pacing of packets transmitted over the network based on the fullness of a buffer on the client device, but may also change the bit rate of the packets based on the network performance.

WO 2011/47335 A1 discloses a method, system, and computer program for adaptively streaming multimedia content. An adaptive stream manager monitors at least one parameter of a user terminal. The adaptive stream manager monitors at least one parameter of the user terminal and predicting a future value of at least one parameter of the user terminal. The adaptive stream manager also selects a target characteristic, based on the predicted future value of the at least one parameter of the user terminal, and requests a multimedia segment having the target characteristic from a media server.

### SUMMARY

In view of this, the present invention provides a method of claim 1, and a player of claim 7 for selecting a bitstream segment based on streaming media. According to the method, and the palyer for selecting a bitstream segment based on streaming media of the embodiments of the present invention, when bandwidth is fully used and it is ensured that buffer underflow does not occur, a manner of down-regulating quality/a bit rate of a high-quality segment and/or up-regulating quality/a bit rate of a low-quality segment is used, so that a finally selected bitstream segment fully uses the bandwidth, quality of segments gets closer, and video quality during video playing becomes smoother.

Embodiments of a first aspect of the present invention disclose a method for selecting a bitstream segment based on streaming media, where the method includes: obtaining segment information of each segment of at least two segments corresponding to a first time in the streaming media, where the segment information includes segment quality; selecting, according to the segment quality of each segment and a preset quality threshold, an initial segment from the at least two segments corresponding to the first time; and if it is determined that downloading of the initial segment does not cause a play exception of a terminal, using the initial segment as a selected bitstream segment.

The method for selecting a bitstream segment based on streaming media according to the embodiments of the first aspect of the present invention makes that a finally selected bitstream segment fully uses bandwidth, quality of segments gets closer, and video quality during video playing becomes smoother.

In a possible implementation manner of the embodiments of the first aspect of the present invention, the determining that downloading of the initial segment does not cause a play exception of a terminal includes: obtaining buffer parameter information of the terminal, where the buffer parameter information includes a preset buffer threshold; and if it is determined, according to segment information of the initial segment and the buffer parameter information of the terminal, that the downloading of the initial segment does not cause an available buffer of the terminal to be less than the preset buffer threshold, determining that the downloading of the initial segment does not cause a play exception of the terminal.

With reference to any one of the foregoing embodiments, in a second possible implementation manner of the embodiments of the first aspect of the present invention, the selecting, according to the segment quality of each segment and a preset quality threshold, an initial segment from the at least two segments corresponding to the first time includes: selecting the segment that is of a minimum absolute value of a difference between segment quality and the quality threshold from all the segments corresponding to the first time.

With reference to any one of the foregoing embodiments, in a third possible implementation manner of the embodiments of the first aspect of the present invention, the segment information further includes a segment time length and a segment bit rate; the buffer parameter information of the terminal further includes a time length of streaming media that is in a buffer and has not been played; before the determining, according to segment information of the initial segment and the buffer parameter information of the terminal, that the downloading of the initial segment does not cause a available buffer of the terminal to be less than the preset buffer threshold, the method further includes: obtaining available network bandwidth for downloading the streaming media by the terminal; and the determining, according to segment information of the initial segment and the buffer parameter information of the terminal, that the downloading of the initial segment does not cause a available buffer of the terminal to be less than the preset buffer threshold includes: determining, according to a segment time length and a segment bit rate of the initial segment and the available network bandwidth, a time length for completing the downloading of the initial segment; where if a sum of the time length of the streaming media that is in the buffer of the terminal and has not been played and the segment time length of the initial segment is not less than a sum of the time length for completing the downloading of the initial segment and the preset buffer threshold, the downloading of the initial segment does not cause the available buffer of the terminal to be less than the preset buffer threshold.

With reference to any one of the foregoing embodiments, in a fourth possible implementation manner of the embodiments of the first aspect of the present invention, after the obtaining buffer parameter information of the terminal, the method further includes: if it is determined, according to the segment information of the initial segment and the buffer parameter information of the terminal, that the downloading of the initial segment causes the available buffer of the terminal to be less than the preset buffer threshold, sequentially selecting, from all the segments corresponding to the first time, a second segment whose segment quality is less than segment quality of the initial segment, using the second segment as an updated initial segment, repeating the foregoing steps until it is determined that downloading of the updated initial segment does not cause the available buffer of the terminal to be less than the preset buffer threshold, and using the updated initial segment as a selected bitstream segment.

With reference to any one of the foregoing embodiments, in a fifth possible implementation manner of the embodiments of the first aspect of the present invention, a value of the preset quality threshold may be preset; or a value of the preset quality threshold is obtained by weighted calculation according to segment quality of a segment that has been downloaded by the terminal; or a value of the preset quality threshold is obtained by weighted calculation according to segment quality of a segment that has been downloaded by the terminal and segment quality of all the segments corresponding to the first time.

Embodiments of a second aspect of the present invention disclose a method for selecting a bitstream segment based on streaming media, where the method includes: separately obtaining segment information of at least two bitstream segments corresponding to a first play time of the streaming media and segment information of at least two bitstream segments corresponding to a second play time, where the segment information of the bitstream segments at the first play time and the segment information of the bitstream segments at the second play time include segment quality; forming a first bitstream segment group by selecting a first bitstream segment from the bitstream segments corresponding to the first play time and selecting a second bitstream segment from the bitstream segments corresponding to the second play time, where the first bitstream segment group is a bitstream segment group that can be continuously played on a terminal; selecting a bitstream segment with minimum segment quality from bitstream segments that are in the first bitstream segment group and have not been selected, selecting, in an ascending order of segment quality and from all bitstream segments at the first play time and corresponding to the bitstream segment with the minimum segment quality, a third bitstream segment whose segment quality is greater than that of the bitstream segment with the minimum segment quality, updating the first bitstream segment group in a manner of replacing the bitstream segment with the minimum segment quality with the third bitstream segment, and if the updated first code steam segment group is a bitstream segment group that can be continuously played on the terminal and a bitstream segment with maximum segment quality in all the bitstream segments at the first play time is not the third bitstream segment, repeating this step until the updated first bitstream segment group is a bitstream segment group that cannot be continuously played on the terminal or the third bitstream segment is the bitstream segment with the maximum segment quality in all the bitstream segments at the first play time; and if the updated first bitstream segment group is a bitstream segment group that cannot be continuously played on the terminal, selecting, from the updated first bitstream segment group, a segment that is before a time at which continuous play cannot be performed or a bitstream segment with maximum segment quality among segments at the time at which continuous play cannot be performed, and if a bitstream segment with maximum segment quality in the updated first bitstream segment group is the third bitstream segment, selecting, in a descending order of segment quality and from all bitstream segments at the first play time or the second play time and corresponding to the third bitstream segment, a bitstream segment whose segment quality is less than the segment quality of the third bitstream segment as a selected bitstream segment at the first play time or the second play time; and repeating the foregoing steps until selected bitstream segments corresponding to the first play time and the second play time are found, and obtaining a second bitstream segment group according to the selected bitstream segment corresponding to the first play time and the selected bitstream segment corresponding to the second play time.

The method for selecting a bitstream segment based on streaming media according to the embodiments of the second aspect of the present invention makes that a finally selected bitstream segment fully uses bandwidth, quality of segments gets closer, and video quality during video playing becomes smoother.

In a possible implementation manner of the embodiments of the second aspect of the present invention, the segment information includes a segment time length and a segment bit rate; after the separately obtaining segment information of at least two bitstream segments corresponding to a first play time of the streaming media and segment information of at least two bitstream segments corresponding to a second play time, the method further includes: obtaining buffer parameter information of the terminal, where the buffer parameter information of the terminal includes a time length of streaming media that is in a buffer and has not been played; and obtaining available network bandwidth for downloading the streaming media by the terminal; and the determining that the first bitstream segment group is a bitstream segment group that can be continuously played on the terminal includes: determining, according to a segment time length and a segment bit rate of the first bitstream segment in the first bitstream segment group and the available network bandwidth, a time length for completing the downloading of the first bitstream segment; and determining, according to a segment time length and a segment bit rate of the second bitstream segment in the first bitstream segment group and the available network bandwidth, a time length for completing the downloading of the second bitstream segment; where if a sum of the time length of the streaming media that is in the buffer of the terminal and has not been played and the segment time length of the first segment is not less than a sum of the time length for completing the downloading of the first bitstream segment and the preset buffer threshold, and a sum of the time length of the streaming media that is in the buffer of the terminal and has not been played, the segment time length of the first segment, and the segment time length of the second segment is not less than a sum of the time length for completing the downloading of the first bitstream segment, the time length for completing the downloading of the second bitstream segment, and the preset buffer threshold, the first bitstream segment group is a bitstream segment group that can be continuously played on the terminal.

With reference to any one of the foregoing embodiments, in a second possible implementation manner of the embodiments of the second aspect of the present invention, if the updated first bitstream segment group is a bitstream segment group that cannot be continuously played on the terminal, the method further includes: if a segment that is before a time at which continuous play cannot be performed and in the updated first bitstream segment group or a bitstream segment with maximum segment quality among segments at the time at which continuous play cannot be performed is not the third bitstream segment, sequentially selecting, in a descending order of segment quality and from all bitstream segments corresponding to the second play time, a fourth bitstream segment whose segment quality is less than that of the bitstream segment corresponding to the second play time in the updated first bitstream segment group, updating the updated first bitstream segment group in a manner of replacing the bitstream segment corresponding to the second play time in the updated first bitstream segment group with the fourth bitstream segment; if the updated first bitstream segment group is a bitstream segment group that can be continuously played on the terminal, selecting a bitstream segment with minimum segment quality from bitstream segments that are in the updated first bitstream segment group and have not been selected, selecting, in a descending order of segment quality and from all bitstream segments at the first play time or the second play time and corresponding to the bitstream segment with the minimum segment quality, a bitstream segment whose segment quality is greater than that of the bitstream segment with the minimum segment quality as an updated third bitstream segment, updating the first bitstream segment group according to the updated third bitstream segment, and repeating this step until the updated first bitstream segment group is a bitstream segment group that cannot be continuously played on the terminal or the updated third bitstream segment is a bitstream segment with maximum segment quality in all the bitstream segments at the first play time or the second play time and corresponding to the updated third bitstream segment; and repeating the foregoing steps until the updated third bitstream segment is a bitstream segment with maximum segment quality in the updated first bitstream segment group, or the fourth bitstream segment is a bitstream with minimum segment quality in all the bitstream segments at the first play time or the second play time and corresponding to the fourth bitstream segment.

With reference to any one of the foregoing embodiments, in a third possible implementation manner of the embodiments of the second aspect of the present invention, after the obtaining a second bitstream segment group according to the selected bitstream segment corresponding to the first play time and the selected bitstream segment corresponding to the second play time, the method further includes: obtaining, according to the second bitstream segment group, segment quality of a bitstream segment corresponding to the first play time in the second bitstream segment group; if the segment quality of the bitstream segment corresponding to the first play time in the second bitstream segment group is greater than a preset quality threshold, sequentially selecting, from all the bitstream segments corresponding to the first play time, a fifth bitstream segment whose segment quality is less than segment quality of the selected bitstream segment corresponding to the first play time, updating the second bitstream segment group by using the fifth bitstream segment as a bitstream segment corresponding to the first play time, and repeating this step until the segment quality of the bitstream segment corresponding to the first play time in the second bitstream segment group is not greater than the preset quality threshold; and outputting the updated second bitstream segment group.

With reference to any one of the foregoing embodiments, in a fourth possible implementation manner of the embodiments of the second aspect of the present invention, the quality threshold may be preset; or the quality threshold is obtained by weighted calculation according to segment quality of a segment that has been downloaded by the terminal; or the quality threshold is obtained by weighted calculation according to segment quality of a segment that has been downloaded by the terminal and segment quality of all the segments corresponding to the first time.

Embodiments of a third aspect of the present invention disclose a player for selecting a bitstream segment based on streaming media, where the player includes: a receiving module, where the receiving module is configured to obtain segment information of each segment of at least two segments corresponding to a first time in the streaming media, where the segment information includes segment quality; an initial segment selecting module, configured to select, according to the segment quality of each segment obtained by the receiving module and a preset quality threshold, an initial segment from the at least two segments corresponding to the first time; and a segment selecting module, where if it is determined that downloading of the initial segment does not cause a play exception of a terminal, the segment selecting module is configured to use the initial segment obtained by the initial segment selecting module as a selected bitstream segment.

The player for selecting a bitstream segment based on streaming media according to the embodiments of the third aspect of the present invention makes that a finally selected bitstream segment fully uses bandwidth, quality of segments gets closer, and video quality during video playing becomes smoother.

In a possible implementation manner of the embodiments of the third aspect of the present invention, the receiving module is further configured to obtain buffer parameter information of the terminal, and the buffer parameter information includes a preset buffer threshold; and if it is determined, according to segment information of the initial segment received by the receiving module and the buffer parameter information of the terminal, that the downloading of the initial segment does not cause an available buffer of the terminal to be less than the preset buffer threshold, determine that the downloading of the initial segment does not cause a play exception of the terminal.

With reference to any one of the foregoing embodiments, in a second possible implementation manner of the embodiments of the third aspect of the present invention, the initial segment selecting module is specifically configured to select the segment that is of a minimum absolute value of a difference between segment quality and the quality threshold from all the segments corresponding to the first time.

With reference to any one of the foregoing embodiments, in a third possible implementation manner of the embodiments of the third aspect of the present invention, the segment information further includes a segment time length and a segment bit rate; the buffer parameter information of the terminal further includes a time length of streaming media that is in a buffer and has not been played; the receiving module is further configured to obtain available network bandwidth for downloading the streaming media by the terminal; and the segment selecting module is specifically configured to determine, according to a segment time length and a segment bit rate of the initial segment and the available network bandwidth, a time length for completing the downloading of the initial segment; and determine that a sum of the time length of the streaming media that is in the buffer of the terminal and has not been played and the segment time length of the initial segment is not less than a sum of the time length for completing the downloading of the initial segment and the preset buffer threshold, consider that the downloading of the initial segment does not cause the available buffer of the terminal to be less than the preset buffer threshold, and use the initial segment as a selected bitstream segment.

With reference to any one of the foregoing embodiments, in a fourth possible implementation manner of the embodiments of the third aspect of the present invention, if it is determined, according to the segment information of the initial segment and the buffer parameter information of the terminal, that the downloading of the initial segment causes the available buffer of the terminal to be less than the preset buffer threshold, the segment selecting module is further specifically configured to select, in a descending order of segment quality and from all the segments corresponding to the first time, a second segment whose segment quality is less than the segment quality of the initial segment, use the second segment as an updated initial segment, repeat the foregoing steps until it is determined that downloading of the updated initial segment does not cause the available buffer of the terminal to be less than the preset buffer threshold, and use the updated initial segment as a selected bitstream segment.

Embodiments of a fourth aspect of the present invention disclose a terminal for selecting a bitstream segment based on streaming media, where the terminal includes: a receiver and a processor; the receiver is configured to obtain segment information of each segment of at least two segments corresponding to a first time in the streaming media, where the segment information includes segment quality; and the processor is configured to select, according to the segment quality of each segment obtained by the receiver and a preset quality threshold, an initial segment from the at least two segments corresponding to the first time; and if it is determined that downloading of the initial segment does not cause a play exception of a terminal, the processor is further configured to use the initial segment obtained by the initial segment selecting module as a selected bitstream segment.

The terminal for selecting a bitstream segment based on streaming media according to the embodiments of the fourth aspect of the present invention makes that a finally selected bitstream segment fully uses bandwidth, quality of segments gets closer, and video quality during video playing becomes smoother.

In a possible implementation manner of the embodiments of the fourth aspect of the present invention, the receiver is further configured to obtain buffer parameter information of the terminal, and the buffer parameter information includes a preset buffer threshold; and the processor is further configured to, if it is determined, according to segment information of the initial segment received by the receiver and the buffer parameter information of the terminal, that the downloading of the initial segment does not cause an available buffer of the terminal to be less than the preset buffer threshold, determine that the downloading of the initial segment does not cause a play exception of the terminal.

With reference to any one of the foregoing embodiments, in a second possible implementation manner of the embodiments of the fourth aspect of the present invention, the segment information further includes a segment time length and a segment bit rate; the buffer parameter information of the terminal further includes a time length of streaming media that is in a buffer and has not been played; the receiver is further configured to obtain available network bandwidth for downloading the streaming media by the terminal; and the processor is further specifically configured to select the segment that is of a minimum absolute value of a difference between segment quality and the quality threshold from all the segments corresponding to the first time; determine, according to a segment time length and a segment bit rate of the initial segment and the available network bandwidth, a time length for completing the downloading of the initial segment; and determine that a sum of the time length of the streaming media that is in the buffer of the terminal and has not been played and the segment time length of the initial segment is not less than a sum of the time length for completing the downloading of the initial segment and the preset buffer threshold, consider that the downloading of the initial segment does not cause the available buffer of the terminal to be less than the preset buffer threshold, and use the initial segment as a selected bitstream segment.

With reference to any one of the foregoing embodiments, in a third possible implementation manner of the embodiments of the fourth aspect of the present invention, the processor is further configured to, if it is determined, according to the segment information of the initial segment and the buffer parameter information of the terminal, that the downloading of the initial segment causes the available buffer of the terminal to be less than the preset buffer threshold, the segment selecting module is further specifically configured to select, in a descending order of segment quality and from all the segments corresponding to the first time, a second segment whose segment quality is less than the segment quality of the initial segment, use the second segment as an updated initial segment, repeat the foregoing steps until it is determined that downloading of the updated initial segment does not cause the available buffer of the terminal to be less than the preset buffer threshold, and use the updated initial segment as a selected bitstream segment.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for selecting a bitstream segment based on streaming media according to an embodiment of a first aspect of the present invention;
FIG. 2 is another flowchart of a method for selecting a bitstream segment based on streaming media according to an embodiment of the first aspect of the present invention;
FIG. 3 is a flowchart of a method for selecting a bitstream segment based on streaming media according to an embodiment of a second aspect of the present invention;
FIG. 4 is a schematic structural diagram of a player for selecting a bitstream segment based on streaming media according to an embodiment of a third aspect of the present invention; and
FIG. 5 is a schematic structural diagram of a terminal for selecting a bitstream segment based on streaming media according to an embodiment of a fourth aspect of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

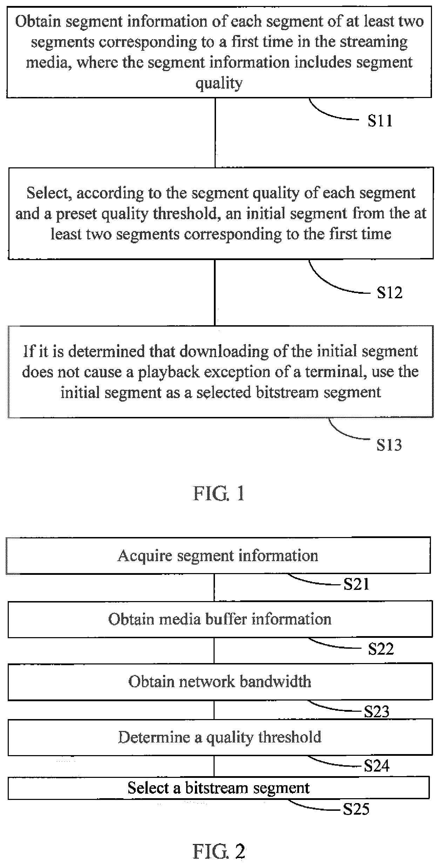

With reference to FIG. 1, the following describes a method for selecting a bitstream segment based on streaming media according to an embodiment of the present invention. As shown in FIG. 1, the method includes:
S 11: Obtain segment information of each segment of at least two segments corresponding to a first time in the streaming media, where the segment information includes segment quality.
S12: Select, according to the segment quality of each segment and a preset quality threshold, an initial segment from the at least two segments corresponding to the first time.
S13: If it is determined that downloading of the initial segment does not cause a play exception of a terminal, use the initial segment as a selected bitstream segment.

The method for selecting a bitstream segment based on streaming media according to this embodiment of the present invention makes that a finally selected bitstream segment fully uses bandwidth, quality of segments gets closer, and video quality during video playing becomes smoother.

With reference to FIG. 2, the following describes a method for selecting a bitstream segment based on streaming media according to an embodiment of the present invention. As shown in FIG. 2, the method includes:
S21: Acquire segment information.

In an embodiment of the present invention, a terminal acquires, in a manner of parsing MPD (media presentation description, media presentation description) information, information about a segment Fij of a bitstream of a program, duration information Dij of the segment, bit rate information Rij of the segment, and quality information Qij of the segment, where Fij represents a j^{th} segment of a bitstream i, Dij represents a play time length of the segment Fij, Rij is bit rate information of the segment, and Qij is quality information of the segment, and the information may be a PSNR (Peak Signal to Noise Ratio, peak signal to noise ratio) value, SIMM (Structural SIMilarity, structural similarity), MOS (MeanOpinionScore, mean opinion score), or other subjective and objective quality data or quality level information. It may be understood that, the following described values of segment quality refer to results of segment quality that are represented by these quality data or quality level information, instead of specifically referring to values of these quality data and quality level information; i and j are integers greater than 0. To clearly describe acquired segment information, a set of data is provided herein, and details are shown in the following table. In the table, a unit of a bit rate is (kbps), a unit of a PSNR is (db), and a unit of segment duration is (s), where i= 1, 2, 3, and j=1, 2, 3.

| | Segment at a time t1 (Fi1) | | | Segment at a time t2 (Fi2) | | | Segment at a time t3 (Fi3) | | |
|---|---|---|---|---|---|---|---|---|---|
| | Bit rate | PSNR | Segment duration | Bit rate | PSNR | Segment duration | Bit rate | PSNR | Segment duration |
| S1 | 2000 | 50 | 2 | 1900 | 55 | 3 | 2300 | 40 | 2.5 |
| S2 | 1000 | 40 | 2 | 950 | 49 | 3 | 1200 | 32 | 2.5 |
| S3 | 500 | 30 | 2 | 490 | 39 | 3 | 700 | 27 | 2.5 |

It may be understood that, data listed in this table is only an example given for facilitating understanding of this embodiment of the present invention, and shall not be considered as a limitation on this embodiment of the present invention. A bit rate, quality, and duration of a bitstream segment may have another value range. Segments at a same time may also be taken in a manner such as two segments and four segments. In this embodiment of the present invention, a manner of acquiring segment information and segment information content further includes another manner that may be implemented by a person of ordinary skill in the art without creative efforts.

In an embodiment of the present invention, segment quality may be obtained from an MPD, or may be obtained from a media data stream sent by a server, or may be sent by a server to a terminal in another communication or data transmission manner that can be figured out by a person of ordinary skill in the art.

S22: Obtain media buffer information.

In an embodiment of the present invention, a time length Tbuf of streaming media content that is in a buffer and has not been played may be obtained in a manner of detecting a media buffer. In an example, with reference to the data in the foregoing table, Tbuf=6s.

In an embodiment of the present invention, buffer information may be sent by a terminal to a server, or may be obtained by estimation at a server side. It may be understood that, the server side generally does not need to obtain the buffer information, and operations are generally completed at a terminal side. The server side needs to obtain the buffer information only when the method for selecting a bitstream segment based on this embodiment of the present invention is used at the server side.

It may be understood that, a representation manner of the media buffer information may be representation by using a time length of streaming media content that is in a buffer of a terminal and has not been played, or may be a representation manner of using volume of data that can be stored in a buffer of a terminal. The manner of representing buffer information by using a time length is used herein only as an example given for facilitating understanding of this embodiment of the present invention. In an embodiment of the present invention, buffer overflow may refer to that "a buffer is less than a threshold", where the threshold may be the volume of data that can be stored in the buffer, such as 0 or 1, or may be segment duration, or may be another preset value, for example, 10s. When it is determined whether downloading of a bitstream segment causes buffer overflow of the terminal, another manner, such as the volume of data that can be stored in the buffer of the terminal, that may be implemented by a person skilled in the art without creative efforts may also be used.

S23: Obtain network bandwidth.

Available bandwidth for downloading media data by the terminal is acquired. In an embodiment of the present invention, with reference to an example given in the foregoing table, the available bandwidth BW (Bandwidth, bandwidth) =1000kbps.

A manner of acquiring a value of the available bandwidth may be measurement or estimation by the terminal itself, or may be sending the value of the available bandwidth to the terminal after measurement or estimation by the server.

S24: Determine a quality threshold.

The quality threshold may be a preset value, for example, quality threshold QTH=40; or the quality threshold may be a dynamically calculated value, for example, a value that is obtained by performing calculation by using quality of a segment that has been downloaded (the quality threshold may be obtained in a manner of calculating an average of quality of segments that have been downloaded), or a value that is obtained by performing calculation by using quality of a segment that has been downloaded and quality of a segment to be downloaded (different weighted values may be respectively assigned to the quality of the segment that has been downloaded and the quality of the segment to be downloaded, and the quality threshold is obtained in manner of weighted calculation). It may be understood that, the foregoing manner of calculating the quality threshold is only an example given for facilitating understanding of this embodiment of the present invention, and shall not be considered as a limitation on this embodiment of the present invention. Manners of obtaining the quality threshold further include another manner that may be implemented by a person of ordinary skill in the art without creative efforts.

In an embodiment of the present invention, a quality threshold interval may be selected (statically or dynamically), for example, [QTH1, QTH2], or (QTH1, QTH2], or (QTH1, QTH2), or [QTH1, QTH2). The quality threshold interval may also be expressed in another manner, for example, a manner such as a quality threshold upper limit QTH2 and a downward fluctuation range DeltaQ2, a quality threshold lower limit QTH1 and an upward fluctuation range DeltaQl, or a quality threshold QTH and upward and downward fluctuation ranges DeltaQ1 and DeltaQ2. It may be understood that, the foregoing selection of a quality threshold interval is only an example given for facilitating understanding of this embodiment of the present invention, instead of a limitation on this embodiment of the present invention.

S25: Select a bitstream segment.

During segment selection, a bitstream segment whose segment quality is closest to the quality threshold is first selected as an initial segment, and then it is determined whether downloading of the initial segment causes buffer overflow of the terminal; if the buffer overflow of the terminal is not caused, the segment is selected; and if the buffer overflow of the terminal is caused, a bitstream segment whose segment quality is less than the segment quality of the initial segment is selected from bitstream segments in a descending order, it continues to determine whether downloading of the segment causes buffer overflow of the terminal, this step is repeated until a selected bitstream segment does not cause buffer overflow of the terminal, and then the operation is stopped.

In an embodiment of the present invention, during segment selection, a segment that can fully use bandwidth and buffer resources is first selected, and then quality/a bit rate of a finally selected segment whose segment quality is greater than the quality threshold QTH is down-regulated, and/or quality/a bit rate of a segment whose quality is less than QTH is up-regulated.

In an embodiment of the present invention, quality or bit rate down-regulation may be dropping a segment whose quality is higher than QTH and selecting a bitstream segment whose quality is lower than QTH, or may be selecting a segment whose quality is closest to the quality threshold QTH; likewise, quality or bit rate up-regulation may be dropping a segment whose quality is lower than QTH and selecting a bitstream segment whose quality is higher than QTH, or may be selecting a segment whose quality is closest to the quality threshold QTH. As shown in the table, for example, an initially selected bitstream segment is F21, and bitstream quality of F21 is represented by using a PSNR, where PSNR=40. In this case, quality up-regulation refers to selecting a segment whose PSNR is greater than that of F21, that is, selecting F11 in the table; quality down-regulation refers to selecting a segment whose PSNR is less than that of F21, that is, selecting F31 in the table. Then, a PSNR value of a selected segment is compared with the quality threshold QTH to determine whether the selection is appropriate, and if it is inappropriate, selecting a bitstream segment continues to be performed. It may be understood that, up-regulation and down-regulation related to quality of a bitstream segment herein are only specific examples given for facilitating understanding of this embodiment of the present invention, instead of a limitation on this embodiment of the present invention.

In an embodiment of the present invention, referring to the data in the foregoing table, F11 is selected at the time t1, Tbuf=6+2-(2000*2)/1000=4s, and the buffer of the terminal does not overflow when F11 is selected. If QTH=40, it continues to determine a buffer condition of the terminal after F21 is selected; in this case, because the buffer does not overflow either, a segment that is finally selected at the time t1 is F21. If QTH=50, F11 is directly selected as a bitstream segment that is selected at the time t1.

The method for selecting a bitstream segment based on streaming media according to this embodiment of the present invention makes that quality of all selected bitstream segments is close to a quality threshold, thereby ensuring that quality of all the selected segments is in a relatively close range, greatly reducing fluctuation in quality when the segments are played, so that video play quality becomes smoother, and experience of watching a program by a user is effectively improved.

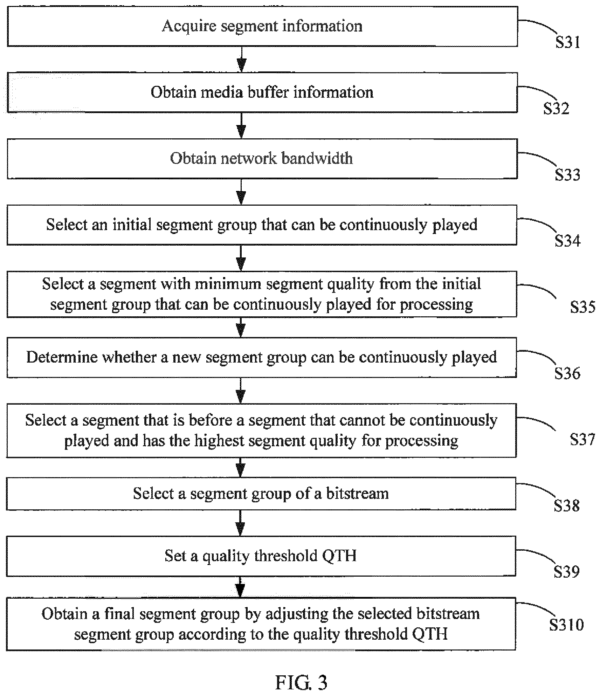

With reference to FIG. 3, the following describes a method for selecting a bitstream segment based on streaming media according to an embodiment of the present invention. As shown in FIG. 3, the method includes:
S31: Acquire segment information.

In an embodiment of the present invention, a terminal acquires, in a manner of parsing MPD information, information about a segment Fij of a bitstream of a program, duration information Dij of the segment, bit rate information Rij of the segment, and quality information Qij of the segment, where Fij represents a j^{th} segment of a bitstream i, Dij represents a play time length of the segment Fij, Rij is bit rate information of the segment, and Qij is quality information of the segment, and the information may be a PSNR (Peak Signal to Noise Ratio, peak signal to noise ratio) value, SIMM (Structural SIMilarity, structural similarity), MOS (MeanOpinionScore, mean opinion score), or other subjective and objective quality data or quality level information. It may be understood that, the following described values of segment quality refer to results of segment quality that are represented by these quality data or quality level information, instead of specifically referring to values of these quality data and quality level information; i and j are integers greater than 0. To clearly describe acquired segment information, a set of data is provided herein, and details are shown in the following table. In the table, a unit of a bit rate is (kbps), a unit of a PSNR is (db), and a unit of segment duration is (s), where i= 1, 2, 3, and j=1, 2, 3.

| | Segment at a time t1 (Fi1) | | | Segment at a time t2 (Fi2) | | | Segment at a time t3 (Fi3) | | |
|---|---|---|---|---|---|---|---|---|---|
| | Bit rate | PSNR | Segment duration | Bit rate | PSNR | Segment duration | Bit rate | PSNR | Segment duration |
| S1 | 2000 | 50 | 2 | 1900 | 55 | 3 | 2300 | 40 | 2.5 |
| S2 | 1000 | 40 | 2 | 950 | 49 | 3 | 1200 | 32 | 2.5 |
| S3 | 500 | 30 | 2 | 490 | 39 | 3 | 700 | 27 | 2.5 |

It may be understood that, data listed in this table is only an example given for facilitating understanding of this embodiment of the present invention, and shall not be considered as a limitation on this embodiment of the present invention. A bit rate, quality, and duration of a bitstream segment may have another value range. Segments at a same time may also be taken in a manner such as two segments and four segments. In this embodiment of the present invention, a manner of acquiring segment information and segment information content further includes another manner that may be implemented by a person of ordinary skill in the art without creative efforts.

In an embodiment of the present invention, segment quality may be obtained from an MPD, or may be obtained from a media data stream sent by a server, or may be sent by a server to a terminal in another communication or data transmission manner that can be figured out by a person of ordinary skill in the art.

S32: Obtain media buffer information.

In an embodiment of the present invention, a time length Tbuf of media content that is in a buffer and has not been played may be obtained in a manner of detecting a media buffer. In an example, with reference to the data in the foregoing table, Tbuf=6s.

In an embodiment of the present invention, buffer information may be sent by a terminal to a server, or may be obtained by estimation at a server side. It may be understood that, the server side generally does not need to obtain the buffer information, and operations are generally completed at a terminal side. The server side needs to obtain the buffer information only when the method for selecting a bitstream segment based on this embodiment of the present invention is used at the server side.

It may be understood that, a representation manner of the media buffer information may be representation by using a time length of streaming media content that is in a buffer of a terminal and has not been played, or may be a representation manner of using volume of data that can be stored in a buffer of a terminal. The manner of representing buffer information by using a time length is used herein only as an example given for facilitating understanding of this embodiment of the present invention. When it is determined whether downloading of a bitstream segment causes buffer overflow of the terminal, another manner, such as the volume of data that can be stored in the buffer of the terminal, that may be implemented by a person skilled in the art without creative efforts may also be used.

S33: Obtain network bandwidth.

Available bandwidth for downloading media data by the terminal is acquired. In an embodiment of the present invention, with reference to an example given in the foregoing table, the available bandwidth BW (Bandwidth, bandwidth) =1000kbps.

A manner of acquiring a value of the available bandwidth may be measurement or estimation by the terminal itself, or may be sending the value of the available bandwidth to the terminal after measurement or estimation by the server.

S34: Select an initial segment group that can be continuously played.

In an embodiment of the present invention, a segment group [F21, F22, F33] that can be continuously played is selected with reference to the data shown in the foregoing table.

The following specifically describes a manner of selecting an initial segment group that can be continuously played according to this embodiment of the present invention. In an embodiment of the present invention, an initial segment group [F11, F12, F13] may be randomly selected, and then it is determined whether the initial segment group can be continuously played. In an embodiment of the present invention, determining whether the initial segment group can be continuously played may use a manner of determining whether downloading of the segment group causes buffer overflow of a terminal; a condition of determining whether a segment group can be continuously played may also be determining whether downloading of a segment is completed before the segment is played. For example, in the initial segment group, buffering time Tbuf of completing downloading of data of F11 at the time t1 =6+2-(2*2000)/1000=4s, and buffering time Tbuf of completing downloading of data of F12 at the time t2 =4+3-(3*1900)/1000=1.3s; because 1.3s is less than duration of a segment at the time t3, the buffer of the terminal overflows in this case, and the segment group cannot be continuously played. Some bitstream segments in the segment group need to be replaced, and this replacement may be a random replacement, or may be replacement performed according to a certain rule. This step is repeated until an initial segment group that can be continuously played is found.

In an embodiment of the present invention, a rule of replacing a bitstream segment of an initial segment group may be that at each time, a bitstream segment whose segment quality is lower than quality of another segment in a current segment group is selected according to an order of segment quality, and the bitstream segment is used as a bitstream segment that needs to be replaced at that time in the segment group.

In an embodiment of the present invention, for convenience and simplified calculation, a segment with minimum bitstream quality is first selected from multiple segments at each time to form a segment group; with reference to the data shown in the foregoing table, a segment group [F31, F32, F33] may be first selected. Then, it is determined whether the segment group can be continuously played; and if the segment group can be continuously played, the segment group [F31, F32, F33] is determined as the initial segment group that can be continuously played. It may be understood that, the foregoing listed manner of selecting the initial segment group that can be continuously played is only an example given for facilitating understanding of this embodiment of the present invention, and shall not be considered as a limitation on this embodiment of the present invention. Manners of obtaining an initial segment group that can be continuously played further include another manner that may be implemented by a person of ordinary skill in the art without creative efforts.

S35: Select a segment with minimum segment quality from the initial segment group that can be continuously played for processing.

The segment with the minimum segment quality is selected from the initial segment group that is selected in step S34 and can be continuously played. In an embodiment of the present invention, in a segment group [F21, F22, F33], a segment with minimum quality is F33, and segment quality Q33=27; this is because a higher PSNR value represents higher segment quality; then, a bitstream segment with a minimum PSNR value may be selected from the segment group. In another quality representation manner, a bitstream segment with a maximum value may need to be selected as a segment with minimum quality, and details are not described herein again.

Because a time corresponding to the bitstream segment F33 is t3, an operation in this case is sequentially selecting a bitstream segment whose segment quality is greater than that of F33 from multiple bitstream segments corresponding to the time t3. As shown in the table, a selected bitstream segment is F23 in this case, that is, a new segment group is [F21, F32, F23].

S36: Determine whether a new segment group can be continuously played.

It is calculated whether the new segment group obtained in step S35 can be continuously played, that is, whether downloading of a segment can be completed before the segment is played. A bit rate of a segment at the time t1 is less than bandwidth, and therefore downloading of the segment at the time t1 can be completed. Buffering time of completing downloading of data at the time t1 is Tbuf=6-2+2=6s; buffering time of completing downloading of a segment at the time t2 is Tbuf=6+3-(950*3)/1000=6.15s; and buffering time of completing downloading of a segment at the time t3 is Tbuf=6.15+2.5-(1200*2.5)/1000=5.65s. A buffer at each time is greater than 2.5 (the buffer does not overflow), and therefore the new segment group can be continuously played, and it turns to step S5 in this case.

If the new segment group cannot be continuously played, it turns to step S37.

In an embodiment of the present invention, steps S35 and S36 need to be repeated. A found segment with minimum quality is F23, a bit rate of a segment at the time t3 is selected as F13, and the previous two segments remain unchanged; therefore, and only buffering time of buffered data volume after the downloading of the segment at the time t3 is completed is calculated: Tbuf=5.65+2.5-(2300*2.5)/1000=2.4s; because the segment F13 is already a segment with the best quality among the segments at the time t3, replacement of lower quality is not performed on F13 when steps 5 and 6 are repeated. Because 2.4 is less than 2.5, a segment at the time t3 is played when downloading of the segment at that time has not been completed; if a player supports such a mechanism of starting play when downloading is not completed, it still turns back to step S35, but if the player does not support the mechanism of starting play when downloading is not completed, it is necessary to turn to step S37; the second play mechanism is used in this example, and therefore it is necessary to turn to step S37.

S37: Select a segment that is before a segment that cannot be continuously played and has the highest segment quality for processing.

The segment (a segment that includes a point that cannot be continuously played) that is before a segment that cannot be continuously played and has the highest segment quality, for example, a segment F22 at the time t2 is selected; a bitstream segment whose segment quality is lower than that of F22 is selected from segments at the time t2, and then it turns to step S36; if the selected segment with the highest quality is a low-quality segment that is selected in step S35 and whose bit rate is improved, the bit rate of the segment is down-regulated (that is, the bitstream segment selected in the previous step S35 is re-selected, improvement and down-regulation herein refer to a relative change between segment quality or a bit rate selected from a bitstream segment at a certain time and segment quality or a bit rate of a preciously selected segment, instead of a processing operation on the previously selected segment), and the segment is not involved in subsequent quality adjustment; when all segments are finally not involved in adjustment or a bit rate cannot be increased any more, the adjustment ends, and it turns to step S38. (In subsequent cyclic adjustment, increasingly more segments are not involved in quality adjustment; finally, bit rates of all segments are not adjusted any more, and the adjustment ends.)

Buffering time of completing downloading of data at the time t1 is Tbuf=6-2+2=6s; buffering time of completing downloading of data at the time t2 is Tbuf=6+3-(490*3)/1000=6.3s; buffering time of completing downloading of data at the time t3 is Tbuf=6.3+2.5-(2300*2.5)/1000=3.05s. In this case, a segment group is [F21, F32, F13].

After adjustment in step S37, a new combination is [F21, F32, F13] in this case, buffering time of completing downloading of data at the time t1 is Tbuf=6-2+2=6s, buffering time of completing downloading of data at the time t2 is Tbuf=6+3-(490*3)/1000=6.3s, and buffering time of completing downloading of data at the time t3 is Tbuf=6.3+2.5-(2300*2.5)/1000=3.05s. The combination can be continuously played, and then it turns to step S35. The segment F32 with the lowest quality continues to be selected from [F21, F32], and a new combination is [F21, F22, F13]; the combination has been calculated before and cannot be continuously played, and it turns to step S37. In this case, a selected segment that has the highest quality and is before the point that cannot be continuously played is F22, where F22 is the segment with the lowest quality that is selected in step S35 and whose bit rate is improved, and therefore a bit rate of F22 is down-regulated to F32 (that is, the segment F32 is re-selected). F32 is not involved in subsequent quality adjustment, and the combination is [F21, F22, F13] and can be continuously played in this case; then, it turns to step S35. In this case, a segment that can be selected to adjust a bit rate is F21 only, a new combination is [F11, F32, F13], and it turns to step S36. Buffering time of completing downloading of data at the time t1 is Tbuf=6+2-(2000*2)/1000=4s, buffering time of completing downloading of data at the time t2 is Tbuf=4+3-(490*3)/1000=5.53s, and buffering time of completing downloading of data at the time t3 is Tbuf=5.53+2.5-(2300*2.5)/1000=2.28s; 2.28<2.5, and continuous play cannot be performed; then, it turns to step S37. A selected segment with the highest quality is F11, where F11 is a segment with the lowest quality that is selected in step S35 and whose bit rate is improved; therefore, the bit rate of F11 is down-regulated to F21 (that is, the segment F21 is re-selected). F21 is not involved in subsequent quality adjustment; in this case, segments F21 and F32 in the combination are not involved in adjustment any more, F13 already has the highest bit rate at the time t3, and the bit rate cannot be increased any more. Therefore, the adjustment ends, and a finally selected segment combination is [F21, F32, F13].

S38: Select a segment group of a bitstream.

For example, the finally selected segments that are listed are [F21, F32, F13], and it can be seen that a quality combination of the segments is [40, 39, 40]; fluctuation in quality is the least, and the combination fully uses bandwidth and buffer resources.

It can be seen from the foregoing result that quality stability of a program that a user watches can be ensured by improving quality/a bit rate of a segment with the lowest quality and/or reducing quality/a bit rate of a segment with the highest quality, thereby effectively improving subjective quality of watching the program by the user.

In the foregoing steps, a buffer value may be data volume of media that has not been played by a terminal, or may be a value obtained by subtracting a preset value from data volume of media that has not been played by a terminal.

In this embodiment of the present invention, after a segment combination is selected, a new segment combination may be selected after downloading of segments in the segment combination is successively completed, or a new segment combination is re-selected after downloading of each segment is completed, or a new segment combination is re-selected after downloading of several segments of the segment combination is completed.

With reference to FIG. 3, the following describes another method for selecting a bitstream segment based on streaming media according to an embodiment of the present invention. As shown in FIG. 3, after a bitstream segment group is selected, the method further includes:
S39: Set a quality threshold QTH.

The quality threshold may be a preset value, for example, quality threshold QTH=40; or the quality threshold may be a dynamically calculated value, for example, a value that is obtained by performing calculation by using quality of a segment that has been downloaded (the quality threshold may be obtained in a manner of calculating an average of quality of segments that have been downloaded), or a value that is obtained by performing calculation by using quality of a segment that has been downloaded and quality of a segment to be downloaded (different weighted values may be respectively assigned to the quality of the segment that has been downloaded and the quality of the segment to be downloaded, and the quality threshold is obtained in manner of weighted calculation). It may be understood that, the foregoing manner of calculating the quality threshold is only an example given for facilitating understanding of this embodiment of the present invention, and shall not be considered as a limitation on this embodiment of the present invention. Manners of obtaining the quality threshold further include another manner that may be implemented by a person of ordinary skill in the art without creative efforts.

In an embodiment of the present invention, a quality threshold interval may be selected (statically or dynamically), for example, [QTH1, QTH2], or (QTH1, QTH2], or (QTH1, QTH2), or [QTH1, QTH2). The quality threshold interval may also be expressed in another manner, for example, a manner such as a quality threshold upper limit QTH2 and a downward fluctuation range DeltaQ2, a quality threshold lower limit QTH1 and an upward fluctuation range DeltaQ1, or a quality threshold QTH and upward and downward fluctuation ranges DeltaQ1 and DeltaQ2. It may be understood that, the foregoing selection of a quality threshold interval is only an example given for facilitating understanding of this embodiment of the present invention, instead of a limitation on this embodiment of the present invention.

S310: Obtain a final segment group by adjusting the selected bitstream segment group according to the quality threshold QTH.

The bitstream segment group selected in step S38 is adjusted according to the quality threshold QTH obtained in step S9. Quality of a bitstream segment whose quality is higher than QTH is down-regulated to be lower than QTH (that is, a bitstream segment whose segment quality is lower than QTH is selected), or the quality of the bitstream segment may be down-regulated to be closest to the quality threshold QTH. Quality of each segment adjusted in this step is close to the quality threshold, thereby ensuring that quality of selected segments is relatively close, and fluctuation in quality after the segments are played is also greatly reduced, which improves subjective quality of watching a program by a user.

In an embodiment of the present invention, in a process of selecting segment quality according to a quality threshold, a buffer still needs to be estimated to ensure that the buffer does not overflow, so that a bitstream segment group can be normally played. A buffer value in the foregoing embodiment may be data volume of media that has not been played by a terminal, or may be a value obtained by subtracting a value from data volume of media that has not been played by a terminal. Generally, a buffer of a terminal does not overflow when quality of a bitstream segment whose quality is higher than QTH is down-regulated to be lower than QTH (that is, a bitstream segment whose segment quality is lower than QTH); in this case, it is not necessary to determine whether a new segment group causes buffer overflow of the terminal, and calculation is simplified.

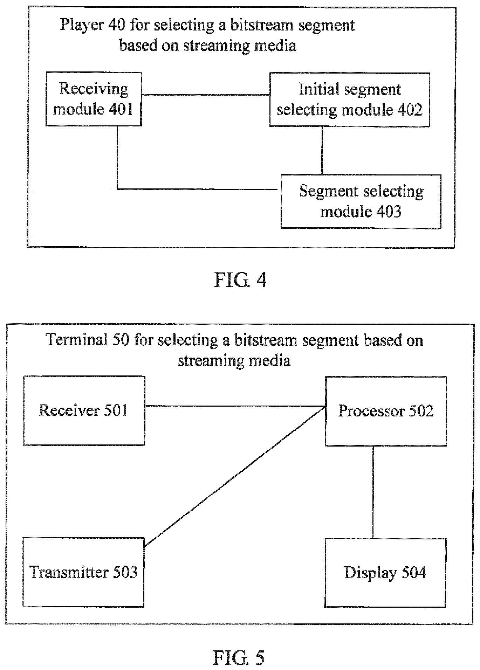

With reference to FIG. 4, the following describes a player 40 for selecting a bitstream segment based on streaming media according to an embodiment of the present invention. As shown in the figure, the apparatus includes: a receiving module 401, an initial segment selecting module 402, and a segment selecting module 403.

In an embodiment of the present invention, the receiving module 401 is configured to acquire segment information, media buffer information, and network bandwidth, where:
the receiving module 401 may be configured to receive MPD information sent by a server. Information about a segment Fij of a bitstream of a program, duration information Dij of the segment, bit rate information Rij of the segment, and quality information Qij of the segment are acquired in a manner of parsing MPD information, where Fij represents a j^{th} segment of a bitstream i, Dij represents a play time length of the segment Fij, Rij is bit rate information of the segment, and Qij is quality information of the segment, and the information may be a PSNR (Peak Signal to Noise Ratio, peak signal to noise ratio) value, SIMM (Structural SIMilarity, structural similarity), MOS (MeanOpinionScore, mean opinion score), or other subjective and objective quality data or quality level information. It may be understood that, the following described values of segment quality refer to results of segment quality that are represented by these quality data or quality level information, instead of specifically referring to values of these quality data and quality level information; i and j are integers greater than 0.

In an embodiment of the present invention, the receiving module 401 may acquire, in a manner of detecting a media buffer, a time length Tbuf of media content that is in a buffer and has not been played.

In an embodiment of the present invention, the receiving module 401 may further acquire available bandwidth for downloading media data by a terminal.

The initial segment selecting module 402 is configured to, during segment selection, first select a bitstream segment whose segment quality is closest to a quality threshold as an initial segment. Then, the segment selecting module 403 determines whether downloading of the initial segment causes a buffer of the terminal to be lower than a set value, where the set value may be 0 or another non-zero value; if the buffer of the terminal is not caused to be lower than the set value, the segment selecting module 403 selects the segment; and if the buffer of the terminal is caused to be lower than the set value, the segment selecting module 403 continues to select, from bitstream segments in a descending order, a bitstream segment whose segment quality is less than that of the initial segment, then continues to determine whether downloading of the segment causes the buffer of the terminal to be lower than the set value, repeat this step until a selected bitstream segment does not cause the buffer of the terminal to be lower than the set value, stop the operation, and output a selected bitstream segment.

In an embodiment of the present invention, during segment selection, a segment that can fully use bandwidth and buffer resources is first selected, and then quality/a bit rate of a finally selected segment whose segment quality is greater than the quality threshold QTH is down-regulated, and/or quality/a bit rate of a segment whose quality is less than QTH is up-regulated.

In an embodiment of the present invention, quality or bit rate down-regulation may be dropping a segment whose quality is higher than QTH and selecting a bitstream segment whose quality is lower than QTH, or may be selecting a segment whose quality is closest to the quality threshold QTH; likewise, quality or bit rate up-regulation may be dropping a segment whose quality is lower than QTH and selecting a bitstream segment whose quality is higher than QTH, or may be selecting a segment whose quality is closest to the quality threshold QTH.

The player 40 for selecting a bitstream segment based on streaming media according to this embodiment of the present invention makes that quality of all selected bitstream segments is close to a quality threshold, thereby ensuring that quality of all the selected segments is in a relatively close range, greatly reducing fluctuation in quality when the segments are played, so that video play quality becomes smoother, and experience of watching a program by a user is effectively improved.

With reference to FIG. 5, the following describes a terminal 50 for selecting a bitstream segment based on streaming media according to an embodiment of the present invention. As shown in FIG. 5, the terminal 50 includes: a receiver 501 and a processor 502.

When a user watches a program, the terminal 50 first needs to acquire an MPD, and an MPD related to the program may be acquired in the following manner: a publisher of the program sends the MPD of the program to the terminal in advance; or the publisher of the program presents a website of the MPD to the user of the terminal, and the user acquires the MPD by using the website.

The receiver 501 may be configured to acquire, according to the MPD, segment information of all bitstreams related to the program, where the information includes but not limited to duration information of a segment, bit rate information of a segment, quality information of a segment, and URL information of a segment. These information may obtained through parsing from the MPD of the program, or may be acquired from other information that is sent by a server and related to the program, or may be acquired from media stream data of the program, or may be acquired from a combination of the foregoing manners. In a process of playing the program, the receiver 501 further acquires a media buffer state of a decoder and a time length or data volume of media data that is in a media buffer and has not been played; the receiver 501 further acquires network condition information of the terminal, where the information is bandwidth for downloading data from a network and a fluctuation condition of the bandwidth, so as to estimate available bandwidth for downloading media data; and the receiver 501 may further acquire information about a segment that has been downloaded by the terminal.

The processor 502 determines, by using media data volume in the buffer, the available bandwidth for downloading media data, and obtained information about a segment to be downloaded and/or information about a segment that has been downloaded that are obtained by the receiver 501, which bitstream segment is to be downloaded. For a method for selecting a bitstream segment by the processor 502, refer to the foregoing method and apparatus embodiments, and details are not described herein again.

In an embodiment of the present invention, the terminal further includes a transmitter 503, where the transmitter 503 obtains a URL of a segment that is selected by the processor 502 and to be downloaded, and sends a GET request to the server.

The receiver 501 is further configured to receive media data sent by the server, or other response information sent by the server, or an MPD. A media buffer (that is, the buffer) of the terminal is configured to store media data that is related to the program, has not been decoded or played, and received by the receiver 501.

In an embodiment of the present invention, the terminal further includes a display 504; the processor 502 is further configured to decode data received by the receiver 501, such as audio and video captions of media; the display 504 is configured to display content decoded by the processor 502.

The terminal 50 for selecting a bitstream segment based on streaming media according to this embodiment of the present invention makes that quality of all selected bitstream segments is relatively close, thereby ensuring that quality of all the selected segments is in a range with relative small differences, greatly reducing fluctuation in quality when the segments are played, so that video play quality becomes smoother, and experience of watching a program by a user is effectively improved.

It may be clearly understood by a person skilled in the art that, for the purpose of convenient and brief description, for a detailed working process of the foregoing terminal, apparatus, and module, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely exemplary implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method performed at a player for selecting a bitstream segment based on streaming media, the method comprises:
Obtaining (S11) segment information of each segment of at least two segments corresponding to a first time in the streaming media, wherein the segment information comprises segment quality;
Selecting (S12), according to the segment quality of each segment and a preset quality threshold, an initial segment from the at least two segments corresponding to the first time; and
obtaining buffer parameter information of a terminal, wherein the buffer parameter information comprises a preset buffer threshold; and
if it is determined, according to segment information of the initial segment and the buffer parameter information of the terminal, that the downloading of the initial segment does not cause an available buffer of the terminal to be less than the preset buffer threshold, determining that the downloading of the initial segment does not cause a play exception of the terminal, using (S 13) the initial segment as a selected bitstream segment;
**characterized in that**,
after the obtaining buffer parameter information of the terminal, the method further comprises:
if it is determined, according to the segment information of the initial segment and the buffer parameter information of the terminal, that the downloading of the initial segment causes the available buffer of the terminal to be less than the preset buffer threshold, sequentially selecting, from all the segments corresponding to the first time, a second segment whose segment quality is less than segment quality of the initial segment, using the second segment as an updated initial segment, repeating the foregoing steps until it is determined that downloading of the updated initial segment does not cause the available buffer of the terminal to be less than the preset buffer threshold, and using the updated initial segment as a selected bitstream segment.

2. The method for selecting a bitstream segment according to claim 1, wherein the selecting, according to the segment quality of each segment and a preset quality threshold, an initial segment from the at least two segments corresponding to the first time comprises:
selecting a segment that is of a minimum absolute value of a difference between segment quality and the quality threshold from all the segments corresponding to the first time.

3. The method for selecting a bitstream segment according to claim 1 or 2, wherein the segment information further comprises a segment time length and a segment bit rate; the buffer parameter information of the terminal further comprises a time length of streaming media that is in a buffer and has not been played; before the determining, according to segment information of the initial segment and the buffer parameter information of the terminal, that the downloading of the initial segment does not cause a available buffer of the terminal to be less than the preset buffer threshold, the method further comprises:
obtaining available network bandwidth for downloading the streaming media by the terminal; and
the determining, according to segment information of the initial segment and the buffer parameter information of the terminal, that the downloading of the initial segment does not cause a available buffer of the terminal to be less than the preset buffer threshold comprises:
determining, according to a segment time length and a segment bit rate of the initial segment and the available network bandwidth, a time length for completing the downloading of the initial segment; wherein:
if a sum of the time length of the streaming media that is in the buffer of the terminal and has not been played and the segment time length of the initial segment is not less than a sum of the time length for completing the downloading of the initial segment and the preset buffer threshold, the downloading of the initial segment does not cause the available buffer of the terminal to be less than the preset buffer threshold.

4. The method for selecting a bitstream segment according to any one of claims 1 to 3, wherein:
a value of the preset quality threshold may be preset; or
a value of the preset quality threshold is obtained by weighted calculation according to segment quality of a segment that has been downloaded by the terminal; or
a value of the preset quality threshold is obtained by weighted calculation according to segment quality of a segment that has been downloaded by the terminal and segment quality of all the segments corresponding to the first time.

5. A player (40) for selecting a bitstream segment based on streaming media, wherein the player comprises:
a receiving module (401), configured to obtain segment information of each segment of at least two segments corresponding to a first time in the streaming media, wherein the segment information comprises segment quality;
an initial segment selecting module (402), configured to select, according to the segment quality of each segment obtained by the receiving module (401) and a preset quality threshold, an initial segment from the at least two segments corresponding to the first time; and
a segment selecting module (403), wherein if it is determined that downloading of the initial segment does not cause a play exception of a terminal, the segment selecting module (403) is configured to use the initial segment obtained by the initial segment selecting module as a selected bitstream segment; wherein the receiving module(401) is further configured to obtain buffer parameter information of the terminal, and the buffer parameter information comprises a preset buffer threshold; and if it is determined, according to segment information of the initial segment received by the receiving module(401) and the buffer parameter information of the terminal, that the downloading of the initial segment does not cause an available buffer of the terminal to be less than the preset buffer threshold, determine that the downloading of the initial segment does not cause a play exception of the terminal;
**characterized in that** if it is determined, according to the segment information of the initial segment and the buffer parameter information of the terminal, that the downloading of the initial segment causes the available buffer of the terminal to be less than the preset buffer threshold, the segment selecting module(403) is further specifically configured to select, in a descending order of segment quality and from all the segments corresponding to the first time, a second segment whose segment quality is less than the segment quality of the initial segment, use the second segment as an updated initial segment, repeat the foregoing steps until it is determined that downloading of the updated initial segment does not cause the available buffer of the terminal to be less than the preset buffer threshold, and use the updated initial segment as a selected bitstream segment.

6. The player (40) for selecting a bitstream segment according to claim 5, wherein the initial segment selecting module (402) is specifically configured to select the segment that is of a minimum absolute value of a difference between segment quality and the quality threshold from all the segments corresponding to the first time.

7. The player (40) for selecting a bitstream segment according to claim 5 or 6, wherein the segment information further comprises a segment time length and a segment bit rate; the buffer parameter information of the terminal further comprises a time length of streaming media that is in a buffer and has not been played;
the receiving module (401) is further configured to obtain available network bandwidth for downloading the streaming media by the terminal; and
the segment selecting module (403) is specifically configured to determine, according to a segment time length and a segment bit rate of the initial segment and the available network bandwidth, a time length for completing the downloading of the initial segment; and determine that a sum of the time length of the streaming media that is in the buffer of the terminal and has not been played and the segment time length of the initial segment is not less than a sum of the time length for completing the downloading of the initial segment and the preset buffer threshold, consider that the downloading of the initial segment does not cause the available buffer of the terminal to be less than the preset buffer threshold, and use the initial segment as a selected bitstream segment.

## Patentansprüche

1. Auf einer Abspielvorrichtung ausgeführtes Verfahren zur Auswahl eines Bitstromsegments basierend auf Streamingmedien, das Verfahren umfassend:
Erhalten (S11) einer Segmentinformation jedes Segments von mindestens zwei Segmenten, die einer ersten Zeit in den Streamingmedien entsprechen, wobei die Segmentinformation die Segmentqualität umfasst;
Auswählen (S12), gemäß der Segmentqualität jedes Segments und eines voreingestellten Qualitätsschwellwerts, eines Anfangssegments aus den mindestens zwei Segmenten, die der ersten Zeit entsprechen; und
Erhalten einer Pufferparameterinformation eines Endgeräts, wobei die Pufferparameterinformation einen voreingestellten Pufferschwellenwert umfasst; und wenn gemäß der Segmentinformation des Anfangssegments und der Pufferparameterinformation des Endgeräts bestimmt wird, dass das Herunterladen des Anfangssegments nicht bewirkt, dass ein verfügbarer Puffer des Endgeräts kleiner als der voreingestellte Pufferschwellenwert ist, Bestimmen, dass das Herunterladen des Anfangssegments keine Abspielausnahme des Endgeräts durch Verwenden (S13) des Anfangssegments als ausgewähltes Bitstromsegment bewirkt;
**dadurch gekennzeichnet, dass**
nach dem Erhalten der Pufferparameterinformation des Endgeräts das Verfahren ferner umfasst:
wenn gemäß der Segmentinformation des Anfangssegments und der Pufferparameterinformation des Endgeräts bestimmt wird, dass das Herunterladen des Anfangssegments bewirkt, dass der verfügbare Puffer des Endgeräts kleiner als der voreingestellte Pufferschwellenwert ist, sequentielles Auswählen aus allen Segmenten, die der ersten Zeit entsprechen, eines zweiten Segments, dessen Segmentqualität geringer als die Segmentqualität des Anfangssegments ist, wobei das zweite Segment als ein aktualisiertes Anfangssegment verwendet wird, wobei die vorhergehenden Schritte wiederholt werden, bis bestimmt wird, dass das Herunterladen des aktualisierten Anfangssegments nicht bewirkt, dass der verfügbare Puffer des Endgeräts kleiner als der voreingestellte Pufferschwellenwert ist, und Verwenden des aktualisierten Anfangssegments als ausgewähltes Bitstromsegment.

2. Verfahren zur Auswahl eines Bitstromsegments nach Anspruch 1, wobei das Auswählen, gemäß der Segmentqualität jedes Segments und eines voreingestellten Qualitätsschwellwerts, eines Anfangssegments aus den mindestens zwei Segmenten, die der ersten Zeit entsprechen, umfasst:
Auswählen eines Segments, das einen minimalen Absolutwert einer Differenz zwischen der Segmentqualität und dem Qualitätsschwellwert aller Segmente aufweist, die der ersten Zeit entsprechen.

3. Verfahren zur Auswahl eines Bitstromsegments nach Anspruch 1 oder 2, wobei die Segmentinformation ferner eine Segmentzeitdauer und eine Segmentbitrate umfasst; die Pufferparameterinformation des Endgeräts ferner eine Zeitdauer der Streamingmedien umfasst, die in einem Puffer befindlich sind und nicht abgespielt wurden; vor dem Bestimmen, gemäß der Segmentinformation des Anfangssegments und der Pufferparameterinformation des Endgeräts, dass das Herunterladen des Anfangssegments nicht bewirkt, dass ein verfügbarer Puffer des Endgeräts kleiner als der voreingestellte Pufferschwellenwert ist, das Verfahren ferner umfasst:
Erhalten der verfügbaren Netzwerkbandbreite zum Herunterladen der Streamingmedien durch das Endgerät; und
das Bestimmen, gemäß der Segmentinformation des Anfangssegments und der Pufferparameterinformation des Endgeräts, dass das Herunterladen des Anfangssegments nicht bewirkt, dass ein verfügbarer Puffer des Endgeräts kleiner als der voreingestellte Pufferschwellenwert ist, umfasst:
Bestimmen, gemäß einer Segmentzeitdauer und einer Segmentbitrate des Anfangssegments und der verfügbaren Netzwerkbandbreite, einer Zeitdauer zum Abschließen des Herunterladens des Anfangssegments; wobei:
wenn eine Summe der Zeitdauer der Streamingmedien, die in dem Puffer des Endgeräts befindlich sind und nicht abgespielt wurden, und der Segmentzeitdauer des Anfangssegments nicht kleiner als eine Summe der Zeitdauer zum Abschließen des Herunterladens des Anfangssegments und des voreingestellten Pufferschwellenwerts ist, das Herunterladen des Anfangssegments nicht bewirkt, dass der verfügbare Puffer des Endgeräts kleiner als der voreingestellte Pufferschwellenwert ist.

4. Verfahren zur Auswahl eines Bitstromsegments nach einem der Ansprüche 1 bis 3, wobei:
ein Wert des voreingestellten Qualitätsschwellwerts voreingestellt sein kann; oder
ein Wert des voreingestellten Qualitätsschwellwerts durch eine gewichtete Berechnung gemäß der Segmentqualität eines Segments erhalten wird, das von dem Endgerät heruntergeladen wurde; oder
ein Wert des voreingestellten Qualitätsschwellwerts durch eine gewichtete Berechnung gemäß der Segmentqualität eines Segments, das von dem Endgerät heruntergeladen wurde, und der Segmentqualität aller Segmente erhalten wird, die der ersten Zeit entsprechen.

5. Abspielvorrichtung (40) zur Auswahl eines Bitstromsegments basierend auf Streamingmedien, wobei die Abspielvorrichtung umfasst:
ein Empfangsmodul (401), das konfiguriert ist, um eine Segmentinformation jedes Segments von mindestens zwei Segmenten zu empfangen, die einer ersten Zeit in den Streamingmedien entsprechen, wobei die Segmentinformation die Segmentqualität umfasst;
ein Anfangssegment-Auswahlmodul (402), das konfiguriert ist, um gemäß der Segmentqualität jedes Segments, das durch das Empfangsmodul (401) erhalten wird, und einem voreingestellten Qualitätsschwellenwert ein Anfangssegment aus den mindestens zwei Segmenten, die der ersten Zeit entsprechen, auszuwählen; und
ein Segmentauswahlmodul (403), wobei, wenn bestimmt wird, dass das Herunterladen des Anfangssegments keine Abspielausnahme eines Endgeräts bewirkt, das Segmentauswahlmodul (403) konfiguriert ist, um das durch das Anfangssegment-Auswahlmodul erhaltene Anfangssegment als ein ausgewähltes Bitstromsegment zu verwenden; wobei das Empfangsmodul (401) ferner konfiguriert ist, um eine Pufferparameterinformation des Endgeräts zu erhalten, und die Pufferparameterinformation einen voreingestellten Pufferschwellenwert umfasst; und
wenn gemäß den Segmentinformationen des durch das Anfangssegment-Empfangsmodul (401) erhaltenen Anfangssegments und der Pufferparameterinformation des Endgeräts bestimmt wird, dass das Herunterladen des Anfangssegments nicht bewirkt, dass ein verfügbarer Puffer des Endgeräts kleiner als der voreingestellte Pufferschwellenwert ist, zu bestimmen, dass das Herunterladen des Anfangssegments keine Abspielausnahme des Endgeräts bewirkt;
**dadurch gekennzeichnet, dass**, wenn gemäß der Segmentinformation des Anfangssegments und der Pufferparameterinformation des Endgeräts bestimmt wird, dass das Herunterladen des Anfangssegments bewirkt, dass ein verfügbarer Puffer des Endgeräts kleiner als der voreingestellte Pufferschwellenwert ist, das Segmentauswahlmodul (403) ferner spezifisch konfiguriert ist, um in einer absteigenden Reihenfolge der Segmentqualität und aus allen Segmenten, die der ersten Zeit entsprechen, ein zweites Segment auszuwählen, dessen Segmentqualität geringer als die Segmentqualität des Anfangssegments ist, das zweite Segment als ein aktualisiertes Anfangssegment zu verwenden, die vorhergehenden Schritte zu wiederholen, bis bestimmt wird, dass das Herunterladen des aktualisierten Anfangssegments nicht bewirkt, dass der verfügbare Puffer des Endgeräts kleiner als der voreingestellte Pufferschwellenwert ist, und das aktualisierte Anfangssegment als ausgewähltes Bitstromsegment zu verwenden.

6. Abspielvorrichtung (40) zur Auswahl eines Bitstromsegments nach Anspruch 5, wobei das Anfangssegment-Auswahlmodul (402) spezifisch konfiguriert ist, um das Segment auszuwählen, das einen minimalen Absolutwert einer Differenz zwischen der Segmentqualität und dem Qualitätsschwellwert aller Segmente aufweist, die der ersten Zeit entsprechen.

7. Abspielvorrichtung (40) zur Auswahl eines Bitstromsegments nach Anspruch 5 oder 6, wobei die Segmentinformation ferner eine Segmentzeitdauer und eine Segmentbitrate umfasst; die Pufferparameterinformation des Endgeräts ferner eine Zeitdauer der Streamingmedien umfasst, die in einem Puffer befindlich sind und nicht abgespielt wurden;
das Empfangsmodul (401) ferner konfiguriert ist, um eine verfügbare Netzwerkbandbreite zum Herunterladen der Streamingmedien durch das Endgerät zu erhalten; und
das Segmentauswahlmodul (403) spezifisch konfiguriert ist, um gemäß einer Segmentzeitdauer und einer Segmentbitrate des Anfangssegments und der verfügbaren Netzwerkbandbreite eine Zeitdauer zum Abschließen des Herunterladens des Anfangssegments zu bestimmen; und zu bestimmen, dass eine Summe der Zeitdauer der Streamingmedien, die in dem Puffer des Endgeräts befindlich sind und nicht abgespielt wurden, und der Segmentzeitdauer des Anfangssegments nicht kleiner als eine Summe der Zeitdauer zum Abschließen des Herunterladens des Anfangssegments und des voreingestellten Pufferschwellenwerts ist, zu berücksichtigen, dass das Herunterladen des Anfangssegments nicht bewirkt, dass der verfügbare Puffer des Endgeräts kleiner als der voreingestellte Pufferschwellenwert ist, und das Anfangssegment als ausgewähltes Bitstromsegment zu verwenden.

## Revendications

1. Procédé effectué au niveau d'un joueur pour choisir un segment de flux binaire en fonction d'un média défilant, lequel procédé consiste à :
- obtenir (S11) des informations de segment pour chaque segment d'au moins deux segments correspondant à un premier temps dans le média défilant, les informations de segment comprenant une qualité de segment ;
- choisir (S12) en fonction de la qualité de segment de chaque segment et d'un seuil de qualité prédéfini, un segment initial parmi les au moins deux segments correspondant au premier temps ; et
- obtenir des informations de paramètre de tampon d'un terminal, lesquelles informations de paramètre de tampon comprennent un seuil de tampon prédéfini ; et
- s'il est déterminé, en fonction des informations de segment du segment initial et des informations de paramètre de tampon du terminal, que le téléchargement du segment initial ne fait pas qu'un tampon disponible du terminal soit inférieur au seuil de tampon prédéfini, déterminer que le téléchargement du segment initial n'entraîne pas une exception de lecture du terminal, utiliser (S 13) le segment initial comme segment de flux binaire choisi ;
**caractérisé en ce que**,
après obtention des informations de paramètre de tampon du terminal, le procédé consiste en outre à :
s'il est déterminé, en fonction des informations de segment du segment initial et des informations de paramètre de tampon du terminal, que le téléchargement du segment initial fait que le tampon disponible du terminal soit inférieur au seuil de tampon prédéfini, choisir séquentiellement, parmi tous les segments correspondant au premier temps, un second segment dont la qualité de segment est inférieure à la qualité de segment du segment initial, utiliser le second segment comme segment initial mis à jour, répéter les étapes précédentes jusqu'à ce qu'il soit déterminé que le téléchargement du segment initial mis à jour ne fasse pas que le tampon disponible du terminal soit inférieur au seuil de tampon prédéfini, et utiliser le segment initial mis à jour comme segment de flux binaire choisi.

2. Procédé de sélection d'un segment de flux binaire selon la revendication 1, dans lequel la sélection, en fonction de la qualité de segment de chaque segment et d'un seuil de qualité prédéfini, d'un segment initial parmi les au moins deux segments correspondant au premier temps consiste à :
choisir un segment qui a une valeur absolue minimale de différence entre la qualité de segment et le seuil de qualité parmi tous les segments correspondant au premier temps.

3. Procédé de sélection d'un segment de flux binaire selon la revendication 1 ou 2, dans lequel les informations de segment comprennent en outre une longueur de temps de segment et un taux binaire de segment ; les informations de paramètre de tampon du terminal comprennent en outre une longueur de temps du média défilant qui est dans un tampon et n'a pas encore été lu ; avant de déterminer, en fonction des informations de segment du segment initial et des informations de paramètre de tampon du terminal, que le téléchargement du segment initial ne fait pas qu'un tampon disponible du terminal soit inférieur au seuil de tampon prédéfini, le procédé consiste en outre à :
obtenir une largeur de bande de réseau disponible pour télécharger le média défilant par le terminal ; et
la détermination, en fonction des informations de segment du segment initial et des informations de paramètre de tampon du terminal, que le téléchargement du segment initial ne fait pas qu'un tampon disponible du terminal soit inférieur au seuil de tampon prédéfini, consiste à :
- déterminer, en fonction d'une longueur de temps de segment et d'un taux binaire de segment du segment initial et de la largeur de bande de réseau disponible, une longueur de temps pour terminer le téléchargement du segment initial ; dans lequel :
- si une somme de la longueur de temps du média défilant qui est dans le tampon du terminal et n'a pas encore été lu et de la longueur de temps de segment du segment initial n'est pas inférieure à une somme de la longueur de temps pour terminer le téléchargement du segment initial et du seuil de tampon prédéfini, le téléchargement du segment initial ne fait pas que le tampon disponible du terminal soit inférieur au seuil de tampon prédéfini.

4. Procédé de sélection d'un segment de flux binaire selon l'une quelconque des revendications 1 à 3, dans lequel :
- une valeur du seuil de qualité prédéfini peut être prédéfinie ; ou
- une valeur du seuil de qualité prédéfini est obtenue par calcul pondéré en fonction de la qualité de segment d'un segment qui a été téléchargé par le terminal ; ou
- une valeur du seuil de qualité prédéfini est obtenue par calcul pondéré en fonction de la qualité de segment d'un segment qui a été téléchargé par le terminal et d'une qualité de segment de tous les segments correspondant au premier temps.

5. Unité de jeu (40) pour choisir un segment de flux binaire en fonction d'un média défilant, laquelle unité de jeu comprend :
- un module de réception (401) conçu pour obtenir des informations de segment pour chaque segment d'au moins deux segments correspondant à un premier temps dans le média défilant, les informations de segment comprenant une qualité de segment ;
- un module de sélection de segment initial (402) conçu pour choisir, en fonction de la qualité de segment de chaque segment obtenu par le module de réception (401) et d'un seuil de qualité prédéfini, un segment initial parmi les au moins deux segments correspondant au premier temps ; et
- un module de sélection de segment (403), dans lequel, s'il est déterminé que le téléchargement du segment initial n'entraîne pas une exception de lecture d'un terminal, le module de sélection de segment (403) est conçu pour utiliser le segment initial obtenu par le module de sélection de segment initial comme segment de flux binaire choisi ; dans lequel le module de réception (401) est en outre conçu pour obtenir des informations de paramètre de tampon du terminal, et les informations de paramètre de tampon comprennent un seuil de tampon prédéfini ; et s'il est déterminé, en fonction des informations de segment du segment initial reçues par le module de réception (401) et des informations de paramètre de tampon du terminal, que le téléchargement du segment initial ne fait pas qu'un tampon disponible du terminal soit inférieur au seuil de tampon prédéfini, déterminer que le téléchargement du segment initial n'entraîne pas une exception de lecture du terminal ;
**caractérisé en ce que**, s'il est déterminé, en fonction des informations de segment du segment initial et des informations de paramètre de tampon du terminal, que le téléchargement du segment initial fait que le tampon disponible du terminal soit inférieur au seuil de tampon prédéfini, le module de sélection de segment (403) est en outre spécifiquement conçu pour choisir, dans un ordre descendant de qualité de segment et parmi tous les segments correspondant au premier temps, un second segment dont la qualité de segment est inférieure à la qualité de segment du segment initial, utiliser le second segment comme segment initial mis à jour, répéter les étapes précédentes jusqu'à ce qu'il soit déterminé que le téléchargement du segment initial mis à jour ne fasse pas que le tampon disponible du terminal soit inférieur au seuil de tampon prédéfini, et utiliser le segment initial mis à jour comme segment de flux binaire choisi.

6. Unité de jeu (40) pour choisir un segment de flux binaire selon la revendication 5, dans laquelle le module de sélection de segment initial (402) est spécifiquement conçu pour choisir le segment qui a une valeur absolue minimale de différence entre la qualité de segment et le seuil de qualité parmi tous les segments correspondant au premier temps.

7. Unité de jeu (40) pour choisir un segment de flux binaire selon la revendication 5 ou 6, dans laquelle :
les informations de segment comprennent en outre une longueur de temps de segment et un taux binaire de segment ; les informations de paramètre de tampon du terminal comprennent en outre une longueur de temps du média défilant qui est dans un tampon et n'a pas encore été lu ;
le module de réception (401) est en outre conçu pour obtenir une largeur de bande de réseau disponible pour télécharger le média défilant par le terminal ; et
le module de sélection de segment (403) est spécifiquement conçu pour déterminer en fonction d'une longueur de temps de segment et d'un taux binaire de segment du segment initial et de la largeur de bande de réseau disponible, une longueur de temps pour terminer le téléchargement du segment initial ; et déterminer qu'une somme de la longueur de temps du média défilant qui est dans le tampon du terminal et n'a pas encore été lu et de la longueur de temps de segment du segment initial n'est pas inférieure à une somme de la longueur de temps pour terminer le téléchargement du segment initial et du seuil de tampon prédéfini, et considérer que le téléchargement du segment initial ne fasse pas que le tampon disponible du terminal soit inférieur au seuil de tampon prédéfini, et utiliser le segment initial comme segment de flux binaire choisi.
